# EUROPÄISCHE PATENTSCHRIFT

(11) **EP 1 535 834 B1**
(45) Veröffentlichungstag und Bekanntmachung des Hinweises auf die Patenterteilung: **16.03.2011**
(21) Anmeldenummer: 04028236.0
(22) Anmeldetag: 29.11.2004
(51) Int. Cl.: B64C 1/40, B64C 1/12, F16L 59/00

(54) **Isolationsaufbau zur Innenisolierung eines Luftfahrzeuges**
Aircraft internal insulation structure
Structure d'isolement intérieur pour aéronef

(30) Priorität: 28.11.2003 US 724311
(43) Veröffentlichungstag der Anmeldung: 01.06.2005
(60) Teilanmeldung: 08104586.6
(73) Patentinhaber: Airbus Operations GmbH, 21129 Hamburg (DE)
(72) Erfinder: Kulcke, Walter, Dr., 21635 Jork (DE); Müller, Rainer, Dipl.-Ing., 21224 Rosengarten (DE)
(74) Vertreter: Maiwald Patentanwalts GmbH

(56) Entgegenhaltungen:
- EP-A- 0 322 777
- DE-A1- 19 849 696
- US-A- 3 867 244
- US-A- 5 565 254
- US-A- 5 788 184
- US-A- 5 811 167

## Beschreibung

Die Erfindung bezieht sich auf einen Isolationsaufbau zur Innenisolierung eines Luftfahrzeuges gemäß dem Oberbegriff des Anspruchs 1.

Es ist bekannt, dass die gegenwärtig im Flugzeugbau eingesetzten Isoliersysteme für die auf der Strukturseite befindliche Primärisolierung im wesentlichen aus einem Isolier-Basismaterial und einer diese Isolierung umhüllende Folie besteht. Mit den herkömmlich eingesetzten Folien wird das Kernmaterial des Isolationssystems vor Wassereintritt geschützt. Außerdem dient die Folienumhüllung zur Befestigung des teilweise bauschigen Isoliermaterials. Diese Umhüllung wird in der Regel dermaßen dimensioniert, wonach sie möglichst geringe Gewichtsanteile besitzt. Dabei lässt sich feststellen, dass aufgrund der relativ dünnen Folie bei stattfindender Wasserdampfdiffusion durch die Folienwand der Wasserdampf in das folienumhüllte Isolierpaket eintritt. Dabei kondensiert zum Teil der Wasserdampf im Isolierpaket aus. Außerdem gelangen über Undichtigkeiten im Isolierpaket bzw. in der FolienumhGllung immer wieder diffundierende flüssige Teilchen, beispielsweise Wasser, in das Isolierpaket. Die Kondensation im Isolierpaket führt dazu, dass eine Ansammlung der flüssigen Teilchen (des Wassers) im Isoliermaterial erfolgt, das sich nur durch zusätzlichen Trocknungsaufwand beseitigen lässt. Diese Tatsache wirkt deshalb auch sehr unangenehm, weil durch die Wasseransammlung(en) das Isolationssytem an Gewicht zunimmt und damit zu einer unnötigen Erhöhung des Gewichtes (Abfluggewichts) eines Flugzeuges führt.

Weiterhin ist aus der Druckschrift: "DE 198 49 696 A1", welche den nächstliegenden Stand der Technik darstellt, ein gattungsgemaßer Isolationsaufbau bekannt, der vollständig von einer Folie umhüllt ist. Die Folie ist innerhalb eines Zwischenraumes angeordnet, den eine Innenverkleidung und eine Außenhaut eines Luftfahrzeuges einschließen. Jene Folie wird mit einem von Gasen und Flüssigkeiten durchdringenden Folienmaterial realisiert, mit dem man in Abhängigkeit der Diffusionsrichtung des durch die Folienwand diffundierenden Mediums ein unterschiedliches Diffusionswiderstandsverhalten umsetzen wird. Genauere Angaben, die sich auf das Diffusionsverhalten jener Folie beziehen, werden nicht mitgeteilt; jedoch lässt sich rückschließen, dass das nicht näher betrachtete Folienmaterial jener Folien unterschiedliche Wassereigenschaften haben sollte, damit ein Rücktransport des akkumulierten Mediums (vom Isoliermaterial aufgenommenen Wassers) durch die Folienmembrane überhaupt denkbar wird. Jener Lösung haftet insofern der Nachteil an, dass das Wasser (der Wasserdampf), das (der) von außerhalb auf die Folie einwirken und durch letztere diffundieren wird, zunächst im Isoliermaterial gefangen sein wird, das dann möglicherweise später durch die Umhüllungsfolien aus dem Isolierpaket entweichen könnte. Ohne kreative Zugaben, die auf die Gestaltung der Folie(n) Bezug nehmen, werden die knapp offenbarten Angaben bezüglich einem unterschiedlichen Diffusionswiderstandsverhalten der Folien kaum vorstellbar, um einen derartig angegebenen Isolationsaufbau funktionstüchtig nachzuarbeiten. Es wird lediglich ein Folienmaterial vorgeschlagen, welches in der Diffusionsrichtung des durch die Folienwand diffundierenden Mediums (auskondensierten Wassers) von der Folieninnen- zur Folienaußertwandoberfläche eine niedrigere Diffusionswiderstandszahl umsetzen soll.

Mit dieser Maßnahme möchte man glaubhaft machen, das ein Folienmaterial, das diese Fähigkeit besitzt, über eine Folienfläche das gesammelte Wasser aus dem folienumhüllten Isolierpaket durch die Folie an die Umgebung abgeben kann, ohne eine Lösung dafür anzugeben. Außerdem vermittelt die Druckschrift: "US 5,565,254 A" entsprechende Vorschläge für die Gestaltung eines Isolationsaufbaus, dem entsprechende Isolierpakete und Folienmaterialien integriert sind, welche hauptsächlich auf die Produktpalette der Firma GORE beschränkt werden. Hinsichtlich weiterer Verbesserungen, welche mit dem situationsbedingten Transport der Medien durch die Folien korrelieren, schweigt sich die Druckschrift aus.

Demgemäß liegt der Erfindung die Aufgabe zugrunde, einen gattungsgemäßen Isolationsaufbau derart zu verbessern, dass durch geeignete Maßnahmen das in einer Folienumhüllung eingeschweißte Isoliermaterial trocken gehalten und gleichfalls der Wassertransport in das Isolierpaket minimiert und aus dem Paket unterstützt wird.

Diese Aufgabe wird durch die in Anspruch 1 angegebenen Maßnahmen gelöst. In den weiteren Ansprüchen sind Ausgestaltungen dieser Maßnahmen angegeben.

Die Erfindung ist in einem Ausführungsbeispiel anhand der beigegeben Zeichnungen näher beschrieben. Es zeigen
- Fig. 1: einen Isolationsaufbau mit einer Folienumhüllung, die einen asymmetrischen Folienaufbau besitzt;
- Fig. 2: eine Isolationsaufbau mit einer Folienumhüllung, die einen symmetrischen Folienaufbau besitzt;
- Fig. 3: eine Darstellung des Wassertransportes über der Folienmembran eines symmetrischen Folienaufbaus nach der Fig. 2;
- Fig. 4: einen Isolationsaufbau nach der Fig. 2 mit einseitiger Folienbeschichtung;
- Fig. 5: eine Darstellung des Stofftransportes durch Membranporen bzw. Poren einer Folie;
- Fig. 6: eine Darstellung der Porenstruktur bei unterschiedlichen Temperaturen;
- Fig. 7: die Darstellung einer symmetrischen Membran / Folie;
- Fig. 8: die Darstellung einer asymmetrischen Membran / Folie;
- Fig. 9: die Darstellung einer asymmetrischen Membran mit unterschiedlichen Schichten und unterschiedlichen Eigenschaften;
- Fig. 10: die Darstellung von zwei unterschiedlich Folien oder Membranen abweichender Porosität mit einem Luftspalt;
- Fig. 11: die Darstellung von zwei Folien oder Membranen unterschiedlicher chemischer Eigenschaft mit einem Luftspalt;
- Fig. 12: ein Isolierpaket respektive Isolationsaufbau mit einem durchlässigen Material als Ersatz für Drainagelöcher.

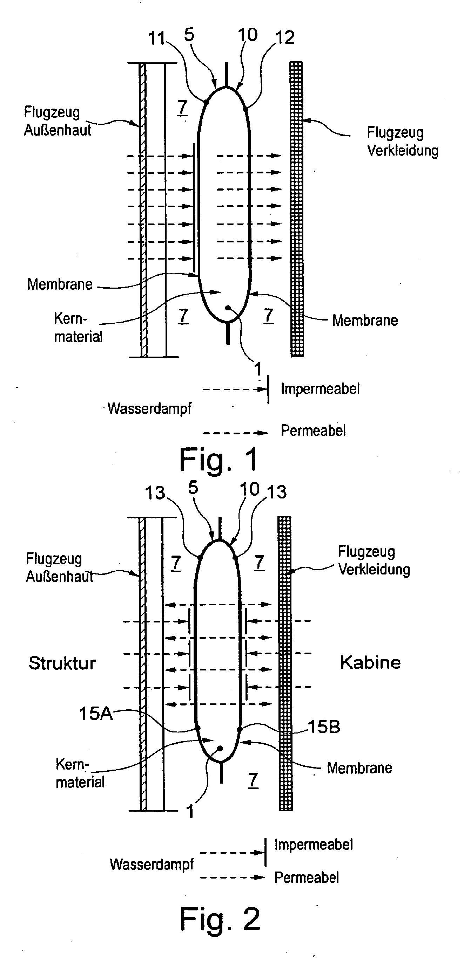

In der Fig. 1 wird nun ein Isolationsaufbau 10 mit einer Folienumhüllung 5 dargestellt, die einen asymmetrischen Folienaufbau besitzt. Dieser Isolationsaufbau 10 berücksichtigt ein (die Flugzeugaußenhaut eines Verkehrsflugzeuges isolierendes) Isolierpaket 1, das vollständig von einer Folienumhüllung 5 umhüllt ist. Dieser Isolationsaufbau 10 befindet sich innerhalb einem freien Zwischenraums 7, der beispielsweise durch einen Strukturbereich (eine Flugzeug-Außenhaut) und wandartiges Verkleidungsteil begrenzt ist, wobei letzteres nahe der Außenhaut des Flugzeuges angeordnet ist. Im Vergleich zu jenem eingangs angegeben Isolationssystem, das man traditionell in einem Verkehrsflugzeug vorfinden wird, wird dieser Isolationsaufbau 10 mit zwei unterschiedlichen Umhüllungsfolien 11, 12 realisiert, deren Folieneigenschaften voneinander abweichen werden. So wird eine erste Umhüllungsfolie 11, die zur Flugzeug-Außenhaut orientiert ist, beispielsweise als Dampfsperre benutzt, dagegen eine zweite Umhüllungsfolie 12, die zur Flugzeugkabine orientiert ist, wasserdampf-permeabel eingesetzt wird. Diese Umhüllungsfolien 11, 12 sind folienendseitig durch Kleben oder Verschweißen fest miteinander verbunden. Das Folienmaterial der ersten und / oder zweiten Umhüllungsfolie 11, 12 wird über die Foliendicke der einzelnen Umhüllungsfolie 11, 12 unterschiedlich gestaltet und / oder geartet sein. Sofern noch weiteren Umhüllungsfolien der ersten und / oder der zweiten Umhüllungsfolie 11, 12 geschichtet werden oder aneinander angereiht der Folienumhüllung 5 integriert sind, wäre denkbar, dass auch hier das Folienmaterial über die Foliendicke der einzelnen Umhüllungsfolie dementsprechend unterschiedlich ist.

Je nach gewünschter Diffusionsrichtung wird die Membrane der beiden Umhüllungsfolien 11, 12 oder weiterer verwendeter Umhüllungsfolien über die Foliendicke (der einzelnen Folie) unterschiedliche Porositäten aufweisen. Beispielsweise wird das richtungsabhängige Diffusionsverhalten der ersten Umhüllungsfolie 11 während des Fluges eines Flugzeuges zum Außenhautbereich der Flugzeugstruktur porös und zum Kabinenbereich weniger porös oder bei einem Bodenaufenthalt des Flugzeuges umgekehrt gestaltet sein.

Weiterhin kann der vorgeschlagene symmetrische Folienaufbau eine Membrane der einzelnen Umhüllungsfolie 11, 12 oder der weiteren Folien n ("n" steht für die Anzahl an Folien) berücksichtigen, die jeweils aus zwei oder mehreren Folienmaterialien (ggf. unterschiedlicher Folienart) integriert ist. Die Folienmaterialien für die Umhüllungsfolien, deren Verwendung vorgeschlagen wird, mit denen jene unterschiedliche Diffusionsdurchlässigkeit umgesetzt werden soll, werden nachfolgend noch näher betrachtet.

Die (bildlich nicht dargestellte) Anordnung der mit mehreren nebeneinander geschichteten Umhüllungsfolien realisierten Folienumhüllung 5 wird nach dem Vorbild der Sandwichbauweise umgesetzt.

Ferner wird vorgeschlagen, dass zwischen den dermaßen geschichteten (benachbarten) Umhüllungsfolien, die aufeinander liegend angeordnet sind, ein Luftspalt realisiert werden kann, der den Transport der diffundierenden Flüssigkeiten (Wasser) oder der diffundierenden gasförmigen Medien (Wasserdampf) günstig(er) beeinflussen kann.

Zurückkommend auf die Folienmaterialien für jene Umhüllungsfolien, die bei dem angegeben asymmetrischen Aufbau einer Membran verwendet werden, werden den Ausführungen folgende Maßnahmen ergänzt, wonach die Folienumhüllung 5 zum Außenhautbereich der Flugzeugstruktur hydrophil und zum Kabinenbereich des Luftfahrzeuges hydrophob dicht gestaltet ist. Danach ist vorzusehen, dass (bei einer Folienumhüllung 5 mit zwei Folien) die erste Umhüllungsfolie 11 mit einem hydrophilen Folienmaterial und die zweite Umhüllungsfolie 12 mit einem hydrophob dichtenden Folienmaterial realisiert ist. Weiter wird vorgeschlagen, dass das Folienmaterial der ersten und / oder zweiten Umhüllungsfolie 11, 12 und / oder (ggf.) jeder weiteren Umhüllungsfolien n mit einem Folienmaterial aus amorphen, kristallinen oder semi-kristallinen Polymeren realisiert ist. Hinsichtlich dem Folienmaterial, das Berücksichtigung finden sollte, wird ein aus PTMSP, 6-FDA-Based; PI, PEI, PS, PTFE, Nafion oder PET bestehendes Polymer-Folienmaterial angegeben. Auch wird erwähnt, dass die hydrophile erste Umhüllungsfolie 11 mit einem Folienmaterial aus Silikon und die hydrophobe zweite Umhüllungsfolie 12 mit einem Folienmaterial aus PTFE realisiert werden kann.

Diese Ausführungen werden dahingehend erweitert, wonach jene gewünschten unterschiedlichen Diffusionsdurchlässigkeiten eben durch die vorteilhafte Anordnung hydrophiler oder hydrophober Bauweisen erreicht werden wird.

Ein Beispiel dafür wird jene Anordnung geben, nach welcher eine hydrophile dichte Membran auf der Strukturseite das Wasser gut aufnehmen und weiterleiten kann; die hydrophobe dichte Membran auf der Kabinenseite wird den Wasserdurchtritt sperren. Das vorgestellte Transportprinzip basiert hier auf einem Lösungs-Diffusions-Mechanismus, der bei hohen Temperaturen den Transport positiv beeinflusst. Wenn die Membran sehr kalt ist, findet ein sehr geringer Transport statt, der zusätzlich in Richtung der Struktur durch die hydrophobe Membran erschwert wird. Wenn die Temperatur höher ist kann das Wasser an der Strukturseite leicht in die hydrophobe Membran eindringen und wegen der höheren Temperatur auch einfacher durch die hydrophobe Membran diffundieren. Das gewählte Beispiel für eine Materialkombination wäre deshalb PTFE auf der Kabinenseite und Silikon auf der Strukturseite.

In der Fig. 2 wird eine weitere Ausführung eines Isolationsaufbaus 10 dargestellt, deren Folienumhüllung 5 mit einem symmetrischen Folienaufbau ausgestattet ist. Es wird nur ein (einzige) dritte Umhüllungsfolie 13 berücksichtigt, die das vorher erwähnte Isolierpaket 1 vollständig umhüllen wird.

Es versteht sich von selbst, dass die Folienenden jener dritten Umhüllungsfolie 13 durch Schweißen oder Kleben oder sonstartige Fügung fest verbunden sind, um das Isolierpaket 1 abzudichten respektive gegen äußere Einflüsse zu schützen.

Eine Ausführung jener Umhüllungsfolie 13 berücksichtigt, dass deren symmetrische Membran bei hohen Temperaturen hydropil und bei geringen Temperaturen hydrophob geartet ist.

Ähnlich dem vorher angegebenen Beispiel der Gestaltung einer Folienumhüllung 5 mit zwei Umhüllungsfolien 11, 12 wird hinsichtlich einem symmetrisch gestalteten Folienaufbau jener Folienumhüllung 5 vorgeschlagen, dass ein erster Folienbereich 15A der dritten Umhüllungsfolie 13, der zum Außenhautbereich der Flugzeugstruktur orientiert ist und keiner Temperaturabhängigkeit unterliegt, hydrophob geartet ist. Ein zweiter Folienbereich 15B dieser dritten Umhüllungsfolie 13, der zum Kabinenbereich des Luftfahrzeuges orientiert ist und einer bestehenden Temperaturabhängigkeit unterliegt, ist ebenfalls hydrophob geartet, wobei dieser hydrophob geartete Folienbereich befähigt ist, unter dem Einfluss geringer Temperaturen einen vermehrten Flüssigkeitstransport umzusetzen.

Auch wäre eine weitere Ausführung denkbar, wonach der erste und der zweite Folienbereich 15A der dritten Umhüllungsfolie 13 nebeneinander liegend in Reihe verbunden sind, die dermaßen verteilt (mit dieser Anordnung) diese Umhüllungsfolie 13 umfänglich umhüllen werden, wobei auch nach dieser Anordnung der erste Folienbereich 15A keiner Temperaturabhängigkeit unterliegen wird und hydrophob geartet ist und der zweite Folienbereich 15B einer bestehenden Temperaturabhängigkeit unterliegt und hydrophil geartet ist.

Im angenommenen Fall wäre dann beispielsweise die symmetrische Membran des ersten Folienbereiches 15A unter geringem Temperatureinfluss ausgesetzt ebenfalls hydrophob geartet und könnte einen vermehrten Wassertransport umsetzen, wogegen die symmetrische Membran des zweiten Folienbereiches 15B auch unter dem Einfluss hoher Temperaturen liegend hydrophob geartet arbeitet.

Andererseits, sofern jene symmetrische Membran der Umhüllungsfolie 13 die Fähigkeit besitzt, unter dem Einfluss hoher Temperaturen einen vermehrten Wassertransport zu zeigen und unter dem Einfluss geringer Temperaturen eine verringerten, wäre noch eine andere Ausführung des symmetrischen Folienaufbaus denkbar.

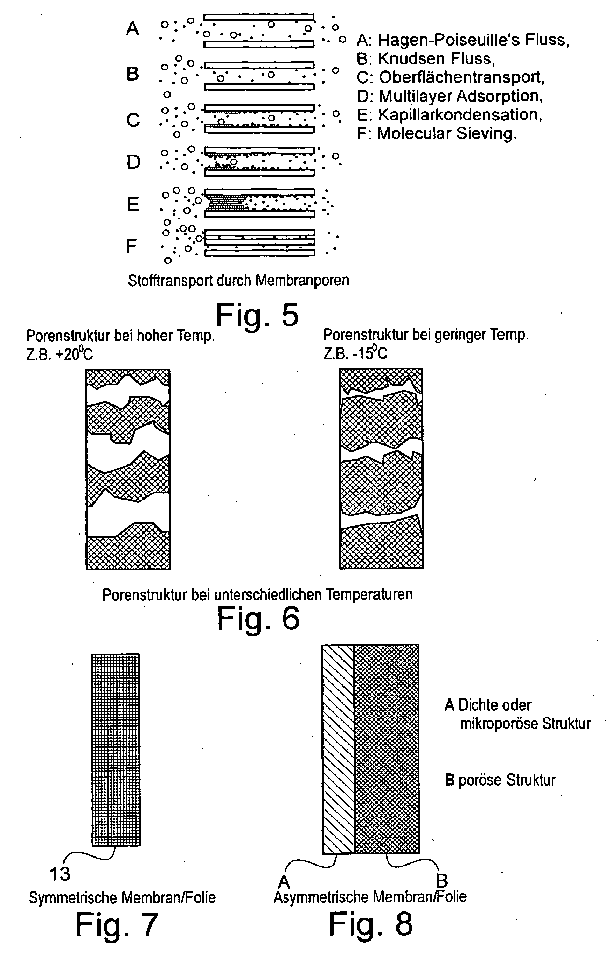

Ergänzt wird der Vollständigkeit halber, dass die Möglichkeit erwogen werden könnte, dass der erste und / oder zweite Folienbereich 15A, 15B aus mehreren Folienschichten unterschiedlichen Folienmaterials geschichtet wird, wie aus den Figuren 8 bis 11 ersichtlich wird.

Diese vorangestellten Angaben werden dahingehend vertieft, wonach der erste Folienbereich 15A mit einem porenfreien Folienmaterial, vorzugsweise aus Silikon oder einem Folienmaterial mit ähnlichen Eigenschaften, realisiert ist. So sind bei jener dritten Umhüllungsfolie 13, die hydrophob geartet ist, über die Folienumhüllung 5 verteilt unter dem Einfluss geringer Temperatur keine oder sehr kleine Poren und unter dem Einfluss hoher Temperaturen größere Poren ausgebildet, die keine Flüssigkeit permeiren lassen.

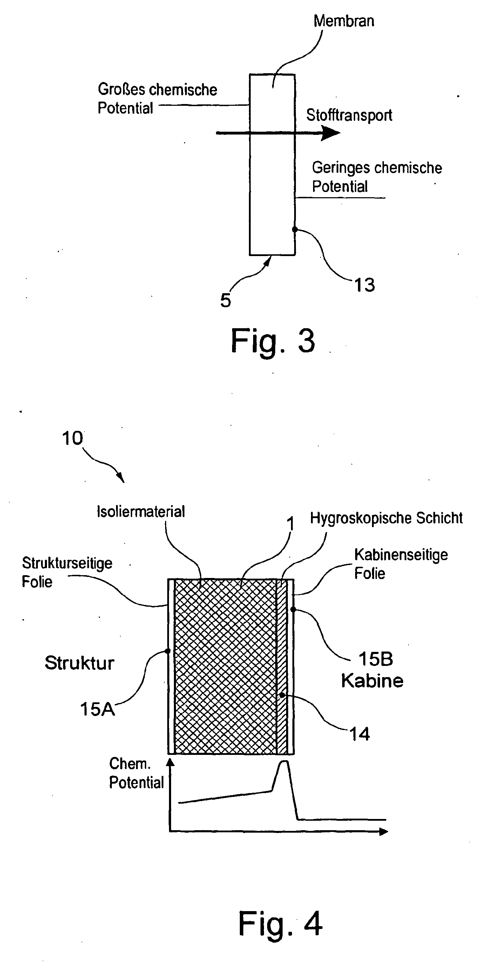

Mit einer anderen Ausführung wird nach dem Vorbild der Fig. 4 vorgeschlagen, dass dem ersten Folienbereich 15A der dritten Umhüllungsfolie 13 hinzukommend eine hygroskopische Schicht 14 beschichtet ist. Diese hygros-kopische Schicht 14 sollte mit stark hygroskopischen Stoffen, vorzugsweise diversen Siliziumdioxid-verbindungen oder einem Glycerin, realisiert werden. Die Siliziumdioxid-verbindungen sind porös geartet, die beispielsweise mit einem Silicagel realisiert sind.

Auch wird hinzugefügt, dass die dritte Umhüllungsfolie 13 oder der erste Folienbereich 15A mit einem hydrophobe Eigenschaften umsetzenden Folienmaterial realisiert wird, das vorzugsweise mit einem "poly (2,2-bistrifluoromethyl-4,5-difluoro-1,3-dioxole) [PDD] / PTFE" realisiert ist.

Neben der eingangs erläuterten und aus der DE 198 49 696 A1 bekannten Verwendung unterschiedlichen Membranfolien, die durch Laminieren etc. zu einer Folie vereinigt werden, können auch weitere unterschiedliche Folienmaterialien, wie beispielhaft angegeben, mit unterschiedlichen physikalischen und chemischen Eigenschaften miteinander kombiniert werden. Hierzu können die Unhüllungsfolien 15A, 15B des Isolierpaketes 1 nach dem Vorbild der Fig. 2 wie folgt aufgebaut sein. Die nach außen zur Flugzeugstruktur zeigende Membran mit jener ersten Umhüllungsfolie 15A muss hydrophob (wasserabweisend) sein und ohne eine Temperaturabhängigkeit auskommen.

Diese Maßnahme wird beispielsweise mit porenfreien Silikonmembranen oder Membranen mit ähnlichen Eigenschaften erlangt. Diese erste Umhüllungsfolie 15A Folie kann, aber muss nicht, aus unterschiedlichen Schichten bestehen.

Die zweite Umhüllungsfolie 15B, die nach dem Vorbild der Fig. 2 zur Kabinenseite zeigt, sollte hydrophob sein und einen temperaturabhängigen Wassertransport aufweisen, wobei bei geringeren Temperaturen ein vermehrter Wassertransport stattfinden wird.

Der Stofftransport durch solche Membranen kann mit dem sogenannten "Surface-Flow" oder mit Kapillarkondensation beschrieben werden. Je geringer die (folienbeeinflussenden) Temperaturen sind, desto besser kann ein Gas kondensieren. Außerdem ist der Stofftransport der kondensierten Phase durch eine Pore größer als der einer gasförmigen, weil die Moleküldichte der kondensierten Phase größer ist als die der gasförmigen. Deshalb ist dieser Transportmechanismus bei geringeren Temperaturen größer als bei höheren.

Neben dem Phasenzustand des zu transportierenden Stoffes hängt der Stofftransport auch vom Konzentrationsgradienten über die Membran ab. Gemäß dem Vorbild der Fig. 3 wird ein Stoff immer vom hohen zum niedrigen Potential transportiert. Dieses wird im folgenden durch das chemische Potential des Wassers beschrieben. Insofern muss das chemische Potential des Wassers auf der zum Isoliermaterial zeigenden Seite der zur Kabine (Flugzeugkabine) orientierten Folie (zweiten Umhüllungsfolie 15B) sehr viel größer als das chemische Potential in der Kabine sein, damit das Wasser aus dem Isolierpaket 1 heraustransportiert wird.

Dieses kann man mit einem Blick auf den Isolationsaufbau 10 nach der Fig. 4 dadurch erreichen, dass die dem Isoliermaterial zugewandte Seite der zur Kabine orientierten Folie (zweite Umhüllungsfolie 15B - nach dem Vorbild der Fig. 2 - mit einem stark hygroskopischen Material beschichtet wird. Das hygroskopische Material wird Wasser akkumulieren und somit das chemische Potential erhöhen können. Außerdem wird durch das stark hygroskopische Material das Wasser dem Isoliermaterial entzogen und zu der Folie transportiert, die das Wasser abgeben soll. Hygroskopische Stoffe sind beispielsweise Silicagel (poröse Siliziumdioxidverbindungen) oder Glycerin.

Die folgenden Ausführungen werden im besonderen entsprechende Folien oder Membranmaterialien bschreiben, die für Isolierpakete im Flugzeug oder in allen anderen Fahrzeugen eingesetzt werden. Jenes als Isolierpaket bezeichnetes Produkt wird sich nachfolgend, wie in den vorangestellten Ausführungen auch begrifflich verwendet, auf einen Isolationsaufbau 10 (folienumhülltes Isolierpaket 1) beziehen, um etwaigen Missverständnissen vorzubeugen.

Auch um ein besseres Verständnis für die nachfolgenden Angaben zu bekommen, werden folgende Aspekte, die auf den Flugzeugbau bezogen sind, aufgegriffen.

Die heute im Passagierflugzeugbau eingesetzten Isolationssysteme für die auf der Strukturseite befindliche Primärisolierungen bestehen im wesentlichen aus einem Kernmaterial und einer einfachen Umhüllungsfolie. Die herkömmlich verwendeten Folien haben in der Regel die Aufgabe, dass Kernmaterial des Isolationssystems vor Wassereintritt zu schützen.
Außerdem dient die Umhüllung zur Befestigung des zum Teil bauschigen Kernmaterials. Die Umhüllung ist in der Regel so ausgelegt, dass sie möglichst leicht ist. Nachteilig ist dabei, dass durch die Wasserdampfdiffusion aufgrund der relativ dünnen Folie Wasserdampf in das Isolierpaket 1 eindringen. Dabei kondensiert zum Teil der Wasserdampf im Isolierpaket. Außerdem gelangen über Undichtigkeiten im Isolierpaket 1 bzw. in der entsprechenden Umhüllungsfolie immer wieder flüssiges Wasser in das Isolierpaket 1.

Die Folge einer derartig berücksichtigten Anordnung wird sein, dass die Kondensation im Isolierpaket 1 dazu führt, dass sich flüssiges Wasser in der Isolierung ansammelt. Weiterhin kommt es durch die Wasseransammlungen zu einer ungewünschten Gewichtszunahme des Isolationssystems, beispielsweise eines Verkehrsflugzeuges, und damit zu einer unnötigen Erhöhung des Abfluggewichtes.

Demgegenüber werden zum Vorteil für jene Flugzeuge Lösungen unterbreitet, die in den Figuren 1 und 2 dargestellt sind und vorher schon vorgestellt werden. Aus diesen Figuren 1 und 2 wird der gewünschte Wassertransport durch die Isolierpakete 1 deutlich, mit dem die (eingangs angegebenen und nochmals verdeutlichten) Nachteile jener traditionell benutzten Lösungen abgestellt werden. So wird in der Fig. 1 der Wassertransport durch ein Isolierpaket 1 mit unterschiedlichen Folien 11, 12 oder Membranen auf der Seite zur Flugzeugaußenhaut und zur Flugzeugkabine angegeben. Im folgenden wird diejenige Folie / Membran, die zur Flugzeugaußenhaut zeigt, "äußere Folie" und die Folie /Membran, die zur Kabine hin zeigt, "innerer Folie" genannt. Während des Fluges eines Flugzeuges soll nun möglichst wenig Wasser an die Flugzeugstruktur gelangen und dort zur Kondensation führen. Hierzu muss der Wassertransport durch die äußere Folie extrem gering sein und auch der Wassertransport durch die innere Folie soll stark verringert werden, um die Ansammlung vom Wasser im Isolierpaket zu vermeiden. Am Boden soll das Wasser zwischen der Isolierung und der Struktur abtransportiert werden, um eine Akkumulation zu vermeiden. Außerdem soll Feuchtigkeit, die im Isoliermaterial gefangen ist, am Boden möglichst ungehindert abtransportiert werden können.

Diese bestehenden Probleme gilt es mit geeigneten Lösungen abzustellen, die gerade bei einem Großraumflugzeug nicht zu vernachlässigen sind. Folien oder Membranen die diesen Zweck erfüllen, können beispielsweise aus folgenden Materialien bestehen: "Silikon, Polydimethylsiloxan, Polyethylen, Poly-(cis-1,4-Butadien), Poly-(cis-1,4-Methylbutadien), Nylon 6 (Polyamid), Polyimide, Zellulosenitrat, Zelluloseester, Polyethylentherephterat, Polymethylmethacrylat, Nafion, auf 6-FDA basierende Materialien, Polyacrylnitril, Polycarbonat, Polysulfon, Poly(etherimid), Polyethersulfon, Polyvinylidenfluorid, Polypropylen, PTMSP (poly(Itrimethyl-silyl-I-propyne ), oder poly 2,2-bistrifluoromethyl-4,5-difluoro-1,3-dioxole, abgekürzt PDD / [PTFE Polytedrafluorethylen]. Die beiden letzten Materialien zeigen einen größeren Massenstrom durch die Membran mit steigender Temperatur, was auf ein großes freies Volumen in der Ploymermatrix zurückschließen lässt. Die Temperaturabhängigkeit wird durch eine Veränderung der in Fig. 5 beschriebenen Transportmechanismen und durch die Veränderung der Porenstruktur hervorgerufen, die in der Fig. 6 gezeigt werden.

Dadurch wird der Wassertransport durch die äußere Folie wegen der geringen Temperatur der Struktur (cirka -20 "C) eingeschränkt. Die verwendeten Materialien können gummiartig, amorph, semikristallin oder kristallin sein. Der Transport durch amorphe Schichten erfolgt nach dem Lösungs - Diffusions - Modell. Um einen besseren Abtransport des flüssigen Wassers zwischen der äußeren Folie und der Struktur zu gewährleisten, können Platzhalter zwischen dem Isolierpaket 1 und der Struktur installiert werden, oder die Isolierpakete können unter Spannung installiert werden, so dass sie nicht großflächig an der Struktur anliegen. Diese baulichen Maßnahmen kommen dann zum Einsatz, wenn die Gefahr der Wasseransammlung zwischen der Isolierfolie und der Struktur oder der Kabinenverkleidung besteht.

Die innere Folie kann aus dem gleichen Materialien wie die oben beschrieben gefertigt sein. Außerdem kann gewebtes, hydrophobes Material verwendet werden, welches flüssiges Wasser zurückhält und dampfförmiges Wasser passieren lässt.

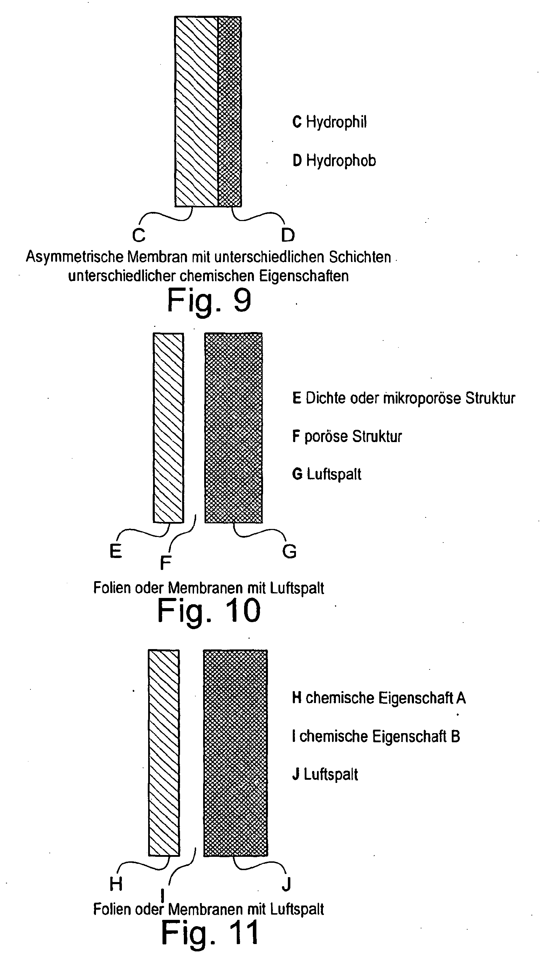

Jene aufgeführten Membranen / Folien können symmetrisch oder asymmetrisch aufgebaut sein. Symmetrische Membranen / Folien, die in der Fig. 7 dargestellt werden, bestehen aus einer Folie oder Membran mit den gleichen Eigenschaften über ihre Dicke. Asymmetrische Membranen bestehen aus zwei oder mehreren Schichten des gleichen Materials oder unterschiedlicher Materialien mit unterschiedlichen Eigenschaften, wie beispielsweise - gemäß der Darstellung in der Fig. 8 - mit unterschiedlichen Porositäten, oder - gemäß der Darstellung in der Fig. 9 - mit unterschiedlichen chemischen Eigenschaften. Die einzelnen Schichten der asymmetrischen Membranen können durch verschiedenen Prozesse, wie beispielsweise Kleben, Verschweißen, Laminieren, "Dip Coating", Polymerisation, Plasma Polymerisation oder "Casting" miteinander verbunden werden. Auch ein Spalt von beispielsweise weniger als 10 mm Dicke, der nach dem Vorbild der Figuren 10 und 11 berücksichtigt ist, kann zwischen den einzelnen Schichten realisiert werden, um kontinuierlich Feuchtigkeit abzuführen. Ein Spalt von etwa 10 mm wird nur dann verwendet werden, wenn mit flüssigem Wasser zu rechnen ist, um ein ungehindertes Ablaufen zu ermöglichen.

Der Abstand zwischen den Folien oder Membranen wird durch Platzhalter realisiert, die in der Membrantechnik "Spacer" genannt werden.

Ein Anwendungsbeispiel für das in der Fig. 1 dargestellte Isolierpaket 1 kann wie demnach folgendermaßen aussehen. Die innere Folie kann beispielsweise ein gewebtes PTFE oder [PDD] /PTFE] sein. Dieses Material lässt nur dampfförmiges Wasser durch und ermöglicht einen Druckausgleich zwischen der Flugzeug-Kabine und dem folienumhüllten eingeschweißten Isoliermaterial. Die äußere Folie besteht beispielsweise aus einem mit Silikon-laminiertem Gewebe, das wasserabweisend, reißfest und chemisch resistent ist.

Ein weiteres Anwendungsbeispiel für die Anordnung nach der Fig. 2 mit zwei gleichen Folien /Membranen für eine innere und äußere Folie könnte wie folgt aussehen. Die äußere Folie besteht aus einer hydrophilen Strukturseite und einer hydrophoben Kabinenseite.

Bei geringen Temperaturen im Fluge ist der Wassertransport durch die hydrophobe Schicht beispielsweise aus [PDD] / PTFE sehr gering. Andere hydrophobe Materialien sind beispielsweise Polyvinylidenfluorid, Polyethylenthereph-terat und Polypropylen. Hydrophile Materialien sind beispielsweise Zelluloseester, Polycarbonat, Polysulfon, Polyethersulfon, Polyetherimid, Polyimid, Polyamid. Am Boden wird das flüssige Wasser, das an der Struktur anfällt, von der hydrophilen Schicht aufgenommen, wodurch sich der Wasserdampf-Partialdruck (chemische Potential) auf der Strukturseite der äußeren Folie erhöht. Durch das größere chemische Potential und die höhere Temperatur wird der Wasserdampftransport durch die hydrophobe Membran unterstützt. Die innere Folie hat die gleiche Orientierung wie die äußere mit den gleichen Funktionalitäten.

In bestimmten Fällen, in denen das Isoliermaterial, die Kabine oder die Struktur permanent getrocknet werden muss, sind auch andere Anordnungen der Folien / Membranen möglich. Die Schichtung kann von außen nach innen gesehen wie folgt ausgelegt sein:
a) hydrophob-hyrophil/Isolierung/hydrophil-hydrophob (nasse Isolationsmatte),
b) hydrophob-hyrophil/Isolierung/ hydrophob-hydrophil (Trocknung der Kabine).
   Ebenso wie die Auswahl von Materialien mit bestimmten chemischen Eigenschaften können ähnliche Effekte auch mit Materialien unterschiedlicher Porosität erreicht werden. Ein Beispiel dafür wäre die Trocknung der Struktur, mit einer von außen nach innen betrachteten Anordnung:
c) Porös-mikroporös(dicht)/Isolierung/porös-mikroporös(dicht)
erreicht werden kann. Die Anzahl der Schichten mit unterschiedlichen Eigenschaften ist beliebig.

In diesem Zusammenhang werden die Porositäten der Folien wie folgt definiert:

| Durchschnittlicher Porendurchmesser | Definition |
|---|---|
| > 0.1 µm | makroporös |
| 5 nm | mesoporös |
| 1 nm | mikroporös |
| < 1 nm | dicht. |

Um Kosten und Gewicht zu sparen und maximale Flüsse zu ermöglichen sollten die dichten und mikroporösen Schichten so dünn wie möglich im Bereich von 0.1 to 0.5 µm sein. Die Dimensionen der unterstützenden, porösen Folien sind im Bereich zwischen 10 to 150 µm.

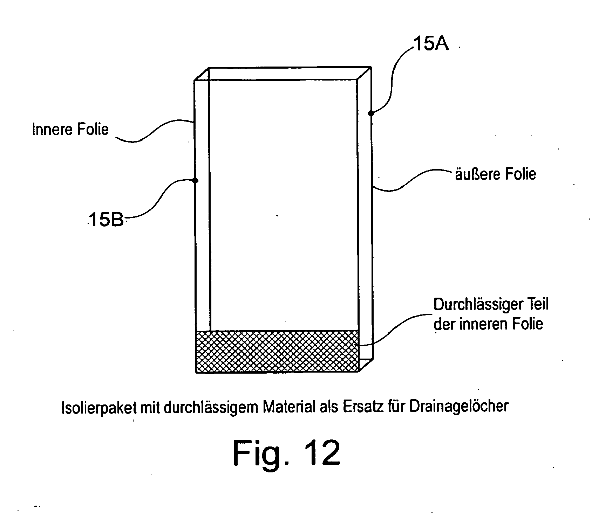

Um die Wasserspeicherungskapazität des Isoliermaterials und somit den Abtransport weiter zu verbessern, muss das Isoliermaterial hydrophob sein, um das Ansammeln von flüssigem Wässer durch Kapillareffekte zu minimieren. Kapillareffekte sind die Hauptursache für die Kontamination von Isoliermaterial mit flüssigem Wasser.
Ein weiterer Vorschlag berücksichtigt das Ersetzten der Drainagelöcher in den Isolierpaketen 1. Zum Verständnis wird erwähnt, dass herkömmliche Isolierpakete an der Paketunterseite entsprechende Drainagelöcher benötigen, die sowohl den Druckausgleich als auch das Ablaufen von flüssigem Wasser aus dem Paket ermöglichen sollen. Eine Alternative zu diesen traditionellen Löchern ist die Berücksichtigung von Folien- / Membranmaterial, dass flüssiges Wasser nicht passieren lassen wird; jedoch große Poren besitzt, die am Boden bei höheren Temperaturen Wasserdampf passieren lassen. Eine solche sogenannte Isoliermatte wird in der Fig. 12 dargestellt. Die verwendete äußere Folie besitzt einen sehr großen Transportwiderstand gegenüber Wasser in allen Aggregatzuständen. Die berücksichtigte innere Folie ist zweigeteilt ausgeführt. Ein oberer Teil dieser Folie ist beispielsweise wie die äußere Folie gestaltet, der untere Teil der inneren Folie ist aus einem hydrophoben, porösen wasserdampfdurchlässigem Material gefertigt.

Die Porosität und die Fläche des unteren Teils der inneren Folie ist ausreichend um den Druckausgleich zu gewährleisten und eventuelles flüssiges Wasser aus dem Inneren des unteren Teils des Isolierpaketes abzuführen. In bestimmten Fällen kann der permeable Teil des Isolierpaketes auch an der Oberseite oder in die äußere Folie integriert werden, um beispielsweise Wasser aus den Isolierpaketen zur belüfteten Strukturseite abzuführen, oder Isoliermatten zu entfeuchten, die wegen der Einbauposition keine Drainagelöcher oder Ventilationsflächen am unteren Ende des Paketes zulassen.

Diese unterschiedlichen Folien können miteinander verschweißt, geklebt, polymerisiert oder laminiert werden. Außerdem ist es denkbar, dass der Wasserdampf permeable Bereich der Folie durch hochenergetische Bestrahlung ("Grafting") mit möglicher anschließender chemischer Behandlung oder durch andere chemische und physikalische Behandlungsmethoden erreicht wird.

Mit diesen ergänzten Isolationsaufbauten werden sich folgende Vorteile ergeben, nach denen
- weniger Wasserdampf in das Isolierpaket eintreten wird, so dass auch weniger Kondensation im Isolierpaket vorliegt;
- Kondenswasser, dass sich einmal im Isolierpaket angesammelt hat, aus der Isolierung in Form von Wasserdampf bzw. Flüssigwasser entweichen kann;
- das Isolierpaket somit leichter trocknen kann;
- es nicht mehr zur Akkumulation von Kondenswasser in der Isolierung kommen kann;.
- dadurch, dass weniger Wasser in der Isolierung vorliegt, sich die Lebensdauer des Isolationssystems erhöhen wird;
- Gewicht im Flugzeug gespart wird, was die Leistung des Passagierflugzeuges erhöhen wird;
- sich die Maßnahme ohne Neuentwicklung eines Flugzeuges einfach im Flugzeugbau realisieren lässt, und demzufolge auch für die Nachrüstung von Im-Service befindlichen Flugzeugen lohnenswert sein kann.

Sofern der Einsatz von einem Trocknungssystem im Fahrzeug vorgesehen wird, um (allgemein) die Fahrzeugstruktur zu trocknen, könnte der vorgestellte Isolationsaufbau für ein Isolationssystem, beispielsweise derjenige eines Verkehrsflugzeuges, ebenso wirksam wie notwendig und nützlich sein.

## Patentansprüche

1. **Isolationsaufbau zur Innenisolierung eines Luftfahrzeuges**, bestehend aus einem Isolierpaket (1), das vollständig von einer Folienumhüllung (5) umgeben und innerhalb eines Zwischenraumes (7) angeordnet ist, wobei die Folienumhüllung (5) mit einem die Diffusion von Gasen und Flüssigkeiten zulassenden Folienmaterial realisiert ist, mit dem in Abhängigkeit der Diffusionsrichtung eines durch die Folienwand diffundierenden Mediums ein unterschiedliches Diffusionsverhalten umgesetzt wird,
**dadurch gekennzeichnet, dass** die Folienumhüllung (5) mit einem asymmetrischen Folienaufbau realisiert ist, der aus mehreren Umhüllungsfolien (11, 12), die wasserundurchlässig oder wasserdurchlässig geartet sind, integriert ist.

2. **Isolationsaufbau** nach Anspruch 1, **dadurch gekennzeichnet, dass** die Folienumhüllung (5) mit einer ersten Umhüllungsfolie (11), die dem Außenhautbereich der Flugzeugstruktur zugewandt ist, und einer zweiten Umhüllungsfolie (12), die dem Kabinenbereich des Luftfahrzeuges zugewandt ist, realisiert ist.

3. **Isolationsaufbau** nach den Ansprüchen 1 und 2, **dadurch gekennzeichnet, dass** das Folienmaterial der ersten und / oder zweiten Umhüllungsfolie (11, 12) und / oder der weiteren Umhüllungsfolien, die der Folienumhüllung (5) integriert sind, mit unterschiedlichen Materialeigenschaften ausgebildet ist.

4. **Isolationsaufbau** nach Anspruch 3, **dadurch gekennzeichnet, dass** das Folienmaterial der ersten und der zweiten Umhüllungsfolie (11, 12) und jeder weiteren Umhüllungsfolie über die Foliendicke mit unterschiedlichen Porositäten ausgestattet ist und die chemischen Eigenschaften jeder Umhüllungsfolie des Folienaufbaus unterschiedlich ausgebildet sind.

5. **Isolationsaufbau** nach den Ansprüchen 1 bis 3, **dadurch gekennzeichnet, dass** das richtungsabhängige Diffusionsverhalten der erste Umhüllungsfolie (11) während eines Fluges zum Außenhautbereich der Flugzeugstruktur durchlässig und zum Kabinenbereich weniger durchlässig oder bei einem Bodenaufenthalt umgekehrt gestaltet ist.

6. **Isolationsaufbau** nach Anspruch 1, **dadurch gekennzeichnet, dass** die Folienumhüllung (5) mit mehreren nebeneinander geschichteten Umhüllungsfolien (11, 12) gleichen oder unterschiedlichen Materials realisiert ist, deren Anordnung nach dem Vorbild der Sandwichbauweise geschehen ist.

7. **Isolationsaufbau** nach Anspruch 6, **dadurch gekennzeichnet, dass** zwischen den geschichteten Umhüllungsfolien ein Luftspalt realisiert ist, der den Transport der diffundierenden Flüssigkeiten oder der diffundierenden gasförmigen Medien günstig beeinflussen wird.

8. **Isolationsaufbau** nach Anspruch 1, **dadurch gekennzeichnet, dass** die Folienumhüllung (5) zum Außenhautbereich der Flugzeugstruktur wasserundurchlässig dicht gestaltet ist und zum Kabinenbereich des Luftfahrzeuges wasserdurchlässig dicht gestaltet ist.

9. **Isolationsaufbau** nach Anspruch 2, **dadurch gekennzeichnet, dass** die erste Umhüllungsfolie (11) mit einem hydrophoben Folienmaterial und die zweite Umhüllungsfolie (12) mit einem hydrophilen, dichtenden Folienmaterial realisiert ist oder umgekehrt.

10. **Isolationsaufbau** nach den Ansprüchen 1 bis 4, **dadurch gekennzeichnet, dass** das Folienmaterial der ersten und / oder zweiten Umhüllungsfolie (11, 12) und / oder der weiteren Umhüllungsfolien mit einem Folienmaterial aus amorphen, kristallinen oder semikristallinen Polymeren oder einem gummiartig ausgebildeten Material realisiert ist.

11. **Isolationsaufbau** nach Anspruch 10, **dadurch gekennzeichnet, dass** ein aus PTMSP, 6-FDA-Based; PI, PEI, PS, PTFE, Nafion oder PET bestehendes Polymer-Folienmaterial berücksichtigt ist.

12. **Isolationsaufbau** nach Anspruch 9, **dadurch gekennzeichnet, dass** die erste Umhüllungsfolie (11) mit einem Folienmaterial aus Silikon und die zweite Umhüllungsfolie (12) mit einem Folienmaterial aus PTFE realisiert ist.

13. **Isolationsaufbau** nach den Ansprüchen 3 und 10, **dadurch gekennzeichnet, dass** die erste Umhüllungsfolie (11) mit einem gewebten hydrophoben Material realisiert ist, wobei das Gewebe dermaßen befähigt ist, dass das flüssige Wasser zurückbehalten wird und das dampfförmige Wasser weitestgehend durch die Gewebeöffnungen diffundieren wird.

14. **Isolationsaufbau** nach Anspruch 2, **dadurch gekennzeichnet, dass** die zweite Umhüllungsfolie (12) mit einem dampfdurchlässigen Material realisiert ist, das einen Druckausgleich zwischen dem Kabinenbereich und dem folienumhüllenden Isoliermaterial des Isolierpaketes (1) umsetzt.

15. **Isolationsaufbau** nach Anspruch 9, **dadurch gekennzeichnet, dass** die erste und / oder die zweite Umhüllungsfolie (11, 12) mit einem gewebten PTFE oder [PDD] / PTFE realisiert ist.

16. **Isolationsaufbau** nach Anspruch 4, **dadurch gekennzeichnet, dass** die Porositäten des verwendeten Folienmaterials mit einem unterschiedlichen Porendurchmesser realisiert sind, der mit einem Porositätenbereich zwischen makroporös, mesoporös, mikroporös und dicht porös definiert ist.

17. **Isolationsaufbau** nach Anspruch 16, **dadurch gekennzeichnet, dass** der durchschnittliche Porendurchmesser mit > 0.1 µm für makroporös, ab 5 nm für mesoporös, ab 1 nm für mikroporös und < 1 nm für dicht porös angegeben ist.

18. **Isolationsaufbau** nach Anspruch 6, **dadurch gekennzeichnet, dass** zwischen den geschichteten Umhüllungsfolien ein Spalt angeordnet ist, damit die kontinuierliche Abführung von Feuchtigkeit machbar ist.

19. **Isolationsaufbau** nach Anspruch 18, **dadurch gekennzeichnet, dass** ein Spalt von etwa 10 mm zwischen aufeinander und / oder nebeneinander gelegenen Umhüllungsfolien angeordnet ist, damit ein ungehindertes Ablaufen von flüssigem Wasser machbar ist.

20. **Isolationsaufbau** nach Anspruch 18, **dadurch gekennzeichnet, dass** der Spaltabstand zwischen den Umhüllungsfolien oder Membranen durch Platzhalter, vorzugsweise "Spacer" realisiert ist.

21. **Isoladonsaufbau** nach Anspruch 1, **dadurch gekennzeichnet, dass** der erste Folienbereich (15A) auf der zum Außenhautbereich der Flugzeugstruktur orientierten Folienseite mit bestehender Temperaturabhängigkeit hydrophil geartet ist und der zweite Folienbereich (15B) auf der zum Kabinenbereich des Luftfahrzeuges orientierten Folienseite ohne bestehende Temperaturabhängigkeit hydrophob geartet ist, wobei die hydrophob geartete Folienseite des zweiten Folienbereiches (15B) während des Fluges befähigt ist, unter dem Einfluss geringer Temperaturen einen sehr geringen Flüssigkeitstransport umzusetzen.

22. **Isolationsaufbau** nach Anspruch 1, **dadurch gekennzeichnet, dass** eine dritte Umhüllungsfolie (13) aus mehreren Folienschichten unterschiedlichen Folienmaterials beliebig geschichtet ist.

23. **Isolationsaufbau** nach Anspruch 1, **dadurch gekennzeichnet, dass** die Schichtung des ersten Folienbereiches (15A) mit einer zum Außenhautbereich der Flugzeugstruktur orientierten Folienschicht hydrophob und mit einer zur Kabinenseite des Luftfahrzeuges orientierten Folienschicht hydrophil geartet ist sowie die Schichtung des zweiten Folienbereiches (15B) mit einer zum Außenhautbereich der Flugzeugstruktur orientierten Folienschicht hydrophil und mit einer zur Kabinenseite des Luftfahrzeuges orientierten Folienschicht hydrophob oder umgekehrt geartet ist, sofern das folienumhüllte Isoliermaterial des Isolierpaketes (1) oder der Kabinenbereich oder der foliennah gelegene Außenhautbereich permanent einer Trocknung unterzogen wird.

24. **Isolationsaufbau** nach Anspruch 1, **dadurch gekennzeichnet, dass** die Porosität einer dritten Umhüllungsfolie (13) auf der zum Außenhautbereich der Flugzeugstruktur orientierten Folienseite (15A) oder Folienschicht pörös und auf der zur Kabinenseite des Luftfahrzeuges orientierten Folienseite (15B) oder Folienschicht mikroporös ausgebildet ist oder umgekehrt.

25. **Isolationsaufbau** nach Anspruch 1 oder 24, **dadurch gekennzeichnet, dass** die Foliendicke einer/der dritten Umhüllungsfolie (13) jenes mikroporös ausgebildeten und unterschiedlich dicht gearteten ersten und / oder zweiten Folienbereiches (15A, 15B) sehr dünn, vorzugsweise im Bereich von 0,1 µm bis 0,5 µm, realisiert ist.

26. **Isolationsaufbau** nach Anspruch 1 oder 24, **dadurch gekennzeichnet, dass** die Foliendicke einer/der dritten Umhüllungsfolie (13) jenes porös ausgebildeten und unterschiedlich dicht gearteten ersten und / oder zweiten Folienbereiches (15A, 15B) dünn, vorzugsweise im Bereich von 10 µm bis 150 µm, realisiert ist.

27. **Isolationsaufbau** nach Anspruch 1 oder 24, **dadurch gekennzeichnet, dass** die Porosität einer/der dritten Umhüllungsfolie (13) mit einem porösen oder mikroporösen gestalteten Folienmaterial oder einer Schicht davon realisiert ist, deren Poren mit einem durchschnittlichen Porendurchmesser von kleiner 0,1 µm bis größer 1 nm umgesetzt sind.

28. **Isolationsaufbau** nach Anspruch 1, **dadurch gekennzeichnet, dass** das Folienmaterial einer dritten Umhüllungsfolie (13) oder des ersten und zweiten Folienbereiches (15A, 15B) unterhalb des Isolierpaketes (1) mit einer Porosität dermaßen ausgestattet ist, dass nur gasförmiges Wasser, ab kein flüssiges Wasser, die Poren passieren wird.

29. **Isolationsaufbau** nach Anspruch 1, **dadurch gekennzeichnet, dass** die zum Außenhautbereich der Flugzeugstruktur orientierte hydrophile Folienseite des ersten Folienbereiches (15A) mit einem Folienmaterial aus Zelluloseester, Polycarbonat, Polysulfon, Polyethersulfon, Polyetherimid, Polyimid oder Polyamid realisiert ist und die zum Kabinenbereich des Luftfahrzeuges orientierte hydrophobe Folienseite des ersten Folienbereiches (15A) mit einem Folienmaterial aus [PDD] /PTFE - Verbindungen oder mit einem hydrophoben Folienmaterial aus Polyvinylidenfluorid, Pölyethylentherephterat oder Polypropylen realisiert ist, mit denen jenen vorhandenen geringen Temperaturen während des Fluges des Luftfahrzeuges der Stofftransport an flüssigem Wasser sehr gering gehalten wird.

30. **Isolationsaufbau** nach Anspruch 1, **dadurch gekennzeichnet, dass** der erste Folienbereich (15A) mit einem porenfreien Folienmaterial, vorzugsweise aus Silikon oder einem Folienmaterial mit ähnlichen Eigenschaften, oder mit einem Folienmaterial geringer Porosität realisiert ist.

31. **Isolationsaufbau** nach Anspruch 1, **dadurch gekennzeichnet, dass** eine Umhüllungsfolie (13) hydrophob geartet ist, bei der über die Folienumhüllung (5) verteilt unter dem Einfluss geringer Temperatur keine oder sehr kleine Poren und unter dem Einfluss hoher Temperaturen größere Poren, die keine Flüssigkeit oder keinen Flüssigkeitsdampf permeiren lassen, ausgebildet sind.

32. **Isolationsaufbau** nach Anspruch 1, **dadurch gekennzeichnet, dass** eine dritte Umhüllungsfolie (13) unter dem Einfluss hoher Temperaturen hydrophil und geringer Temperaturen hydrophob ausgebildet ist.

33. **Isolationsaufbau** nach den Ansprüchen 1, **dadurch gekennzeichnet, dass** dem zweiten Folienbereich (15B) einer dritten Umhüllungsfolie (13) eine hygroskopische Schicht (14) beschichtet ist.

34. **Isolationsaufbau** nach Anspruch 33, **dadurch gekennzeichnet, dass** der hygroskopischen Schicht (14) mit stark hygroskopischen Stoffen, vorzugsweise Siliziumdioxidverbindungen oder einem Glycerin, realisiert ist.

35. **Isolationsaufbau** nach Anspruch 34, **dadurch gekennzeichnet, dass** die Siliziuindioxidverbindungen porös geartet sind, die mit einem Silicagel realisiert sind.

36. **Isolationsaufbau** nach Anspruch 9, **dadurch gekennzeichnet, dass** die erste oder eine dritte Umhüllungsfolie (11, 13) oder der erste Folienbereich (15A) mit einem hydrophobe Eigenschaften umsetzenden Folienmaterial, vorzugsweise einem "poly (2,2-bistrifluoromethyl-4,5-difluoro-1,3-dioxole) [PDD] / PTFE" realisiert ist.

37. **Isolationsaufbau** nach Anspruch 32, **dadurch gekennzeichnet, dass** der erste Folienbereich (15A) keiner Abhängigkeit einer Temperatur unterlegen und hydrophob geartet ist sowie der zweite Folienbereich (15B) einer bestehenden Temperaturabhängigkeit unterlegen und ebenfalls hydrophob geartet ist oder umgekehrt.

38. **Isolationsaufbau** nach Anspruch 1, **dadurch gekennzeichnet, dass** die Folienumhüllung 5 und eine dritte Umhüllungsfolie 13 der folienumhüllten Isolierpakete 1 mit entsprechenden Drainagelöchern oder anderen Maßnahmen realisiert ist, die einen Druckausgleich zwischen dem Kabinenbereich und dem folienumhüllenden Isoliermaterial des Isolierpaketes (1) und der Drainage von flüssigem Wasser umsetzen.

## Claims

1. An insulation structure for insulating the interior of an aircraft, comprising an insulation package (1) that is completely enclosed by a foil envelope (5) and that is arranged within a space (7), wherein the foil envelope (5) has been implemented with a foil material that permits the diffusion of gases and liquids, by means of which foil material depending on the direction of diffusion of a medium diffused through the foil wall a different diffusion behaviour is implemented, wherein the foil envelope (5) has been implemented by means of an asymmetrical foil design that is integrated from several enveloping foils (11, 12) that are of a nature so as to be water-impermeable or water-permeable.

2. The insulation structure of claim 1, wherein the foil envelope (5) has been implemented with a first enveloping foil (11) that faces the exterior skin region of the aircraft structure, and with a second enveloping foil (12) that faces the cabin region of the aircraft.

3. The insulation structure of claims 1 and 2, wherein the foil material of the first and/or second enveloping foil (11, 12) and/or of the further enveloping foils that are integrated in the foil envelope (5) comprise different material properties.

4. The insulation structure of claim 3, wherein the foil material of the first and the second enveloping foil (11, 12) and of each further enveloping foil across the foil thickness comprises different porosities, and the chemical properties of each enveloping foil of the foil structure are different.

5. The insulation structure of claims 1 to 3, wherein the direction-dependent diffusion behaviour of the first enveloping foil (11) during a flight is designed to be permeable towards the exterior skin region of the aircraft structure, and less permeable towards the cabin region, or the opposite during a stay on the ground.

6. The insulation structure of claim 1, wherein the foil envelope (5) has been implemented by means of several enveloping foils (11, 12), layered one beside the other, of an identical or different material, with the arrangement of said enveloping foils (11, 12) being modelled on the sandwich construction.

7. The insulation structure of claim 6, wherein between the layered enveloping foils an air gap has been implemented, which will have a favourable influence on the transport of the diffusing liquids or the diffusing gaseous media.

8. The insulation structure of claim 1, wherein the foil envelope (5) is designed so as to be water-impermeably dense towards the exterior skin region of the aircraft structure, and water-permeably dense towards the cabin region of the aircraft.

9. The insulation structure of claim 2, wherein the first enveloping foil (11) has been implemented by means of a hydrophobic foil material, and the second enveloping foil (12) has been implemented by means of a hydrophilic, sealing foil material or vice versa.

10. The insulation structure of claims 1 to 4, wherein the foil material of the first and/or second enveloping foil (11, 12) and/or of the further enveloping foils has been implemented by means of a foil material comprising amorphous, crystalline or semi-crystalline polymers or a rubber-like material.

11. The insulation structure of claim 10, wherein a polymer foil material has been considered that comprises PTMSP, 6-FDA-based; PI, PEI, PS, PTFE, Nafion or PET.

12. The insulation structure of claim 9, wherein the first enveloping foil (11) has been implemented by means of a foil material comprising silicon, and the second enveloping foil (12) has been implemented by means of a foil material comprising PTFE.

13. The insulation structure of claims 3 and 10, wherein the first enveloping foil (11) has been implemented by means of a woven hydrophobic material, wherein the woven material is able to retain the liquid water and to diffuse the vaporous water to a very large extent through the openings in the woven material.

14. The insulation structure of claim 2, wherein the second enveloping foil (12) has been implemented by means of a vapour-permeable material that carries out pressure equalisation between the cabin region and the foil-enveloping insulation material of the insulation package (1).

15. The insulation structure of claim 9, wherein the first and/or the second enveloping foil (11, 12) have/has been implemented by means of a woven PTFE or [PDD]/PTFE.

16. The insulation structure of claim 4, wherein the porosities of the foil material used have been realised by means of a different pore diameter that has been defined as having a porosity range of between macroporous, mesoporous, microporous and densely porous.

17. The insulation structure of claim 16, wherein the average pore diameter has been stated as being > 0.1 µm for macroporous, from 5 nm for mesoporous, from 1 nm for microporous and < 1 nm for densely porous.

18. The insulation structure of claim 6, wherein between the layered enveloping foils a gap is arranged so that the continuous removal of humidity is feasible.

19. The insulation structure of claim 18, wherein a gap of approximately 10 mm is arranged between enveloping foils that rest on top of each other and/or beside each other so that unhindered drainage of liquid water is feasible.

20. The insulation structure of claim 18, wherein the gap spacing between the enveloping foils or membranes has been implemented by place holders, preferably by spacers.

21. The insulation structure of claim 1, wherein the first foil region (15A) on the foil side facing the exterior skin region of the aircraft structure with existing temperature dependence is of a hydrophilic nature, while the second foil region (15B) on the foil side facing the cabin region of the aircraft without existing temperature dependence is of a hydrophobic nature, wherein the hydrophobically-natured foil side of the second foil region (15B) during the flight is able under the influence of low temperatures to implement a very small liquid transport.

22. The insulation structure of claim 1, wherein a third enveloping foil (13) is layered in any desired manner comprising several foil layers of different foil material.

23. The insulation structure of claim 1, wherein the layering of the first foil region (15A) on the foil side facing the exterior skin region of the aircraft structure is of a hydrophobic nature, and on the foil layer facing the cabin side of the aircraft is of a hydrophilic nature, and the layering of the second foil region (15B) on the foil layer facing the exterior skin region of the aircraft structure is of a hydrophilic nature and on the foil layer facing the cabin side of the aircraft is of a hydrophobic nature or vice versa, provided the foil-enveloped insulation material of the insulation package (1) or the cabin region or the exterior skin region situated near the foil is permanently subjected to drying.

24. The insulation structure of claim 1, wherein the porosity of a third enveloping foil (13) on the foil side (15A) or foil layer facing the exterior skin region of the aircraft structure is porous, and on the foil side (15B) or foil layer facing the cabin side of the aircraft is microporous or vice versa.

25. The insulation structure of claim 1 or 24, wherein the foil thickness of a/the third enveloping foil (13) of that microporous first and/or second foil region (15A, 15B) that is of a differently dense nature has been implemented so as to be very thin, preferably ranging from 0.1 µm to 0.5 µm.

26. The insulation structure of claim 1 or 24, wherein the foil thickness of a/the third enveloping foil (13) of that porous first and/or second foil region (15A, 15B) that is of a differently dense nature has been implemented so as to be very thin, preferably ranging from 10 µm to 150 µm.

27. The insulation structure of claim 1 or 24, wherein the porosity of a/the third enveloping foil (13) has been implemented by means of a porous or microporous foil material or a layer thereof, whose pores have been implemented with an average pore diameter of less than 0.1 µm to greater than 1 nm.

28. The insulation structure of claim 1, wherein the foil material of a third enveloping foil (13) or of the first and second foil region (15A, 15B) underneath the insulation package (1) comprises a porosity such that only gaseous water, but no liquid water, will pass through the pores.

29. The insulation structure of claim 1, wherein the hydrophilic foil side, which faces the exterior skin region of the aircraft structure, of the first foil region (15A) has been implemented by means of a foil material comprising cellulose ester, polycarbonate, polysulfone, polyethersulfone, polyetherimide, polyimide or polyamide, and the hydrophobic foil side, which faces the cabin region of the aircraft, of the first foil region (15A) has been implemented by means of a foil material comprising [PDD]/PTFE compounds or by means of a hydrophobic foil material comprising polyvinylidene fluoride, polyethylene therephtalate or polypropylene, by means of which with existing low temperatures during the flight of the aircraft, the mass transfer of liquid water is kept very low.

30. The insulation structure of claim 1, wherein the first foil region (15A) has been implemented by means of a pore-free foil material, preferably comprising silicon or a foil material with similar characteristics or by means of a foil material of little porosity.

31. The insulation structure of claim 1, wherein an enveloping foil (13) is of a hydrophobic nature, in which distributed across the foil envelope (5) under the influence of low temperatures no pores or very small pores are formed, while under the influence of high temperatures larger pores are formed that do not allow liquid or vaporised liquid to permeate.

32. The insulation structure of claim 1, wherein a third enveloping foil (13) is designed so as to be hydrophilic under the influence of high temperatures, and hydrophobic under the influence of low temperatures.

33. The insulation structure of claim 1, wherein the second foil region (15B) of a third enveloping foil (13) comprises a hygroscopic layer (14).

34. The insulation structure of claim 33, wherein the hygroscopic layer (14) has been implemented by means of strongly hygroscopic materials, preferably silicon dioxide compounds or a glycerine.

35. The insulation structure of claim 34, wherein the silicon dioxide compounds that have been implemented by a silica gel are of a porous nature.

36. The insulation structure of claim 9, wherein the first or a third enveloping foil (11, 13) or the first foil region (15A) has been implemented by means of a foil material that implements hydrophobic properties, preferably by means of a poly (2,2-bistrifluoromethyl-4,5-difluoro-1,3-dioxole) [PDD]/PTFE.

37. The insulation structure of claim 32, wherein the first foil region (15A) is not subject to temperature dependence and is of a hydrophobic nature, while the second foil region (15B) is subject to an existing temperature dependence and is also of a hydrophobic nature or vice versa.

38. The insulation structure of claim 1, wherein the foil envelope 5 and a third enveloping foil 13 of the foil-enveloped insulation packages 1 have been implemented with corresponding drainage holes or other measures that implement pressure equalisation between the cabin region and the foil-enveloping insulation material of the insulation package (1) and the drainage of liquid water.

## Revendications

1. Structure isolante pour l'isolation intérieure d'un aéronef, constituée d'un paquet isolant (1), qui est totalement entouré d'un gainage de feuilles (5) et est disposé à l'intérieur d'un espace intermédiaire (7), le gainage de feuilles (5) étant réalisé avec un matériau de feuilles qui autorise la diffusion de gaz et de liquides, matériau par lequel un comportement de diffusion différent est réalisé en fonction de la direction de diffusion d'un agent diffusant au travers de la paroi des feuilles, **caractérisée en ce que** le gainage de feuilles (5) est réalisé avec une structure de feuilles asymétrique, dans laquelle sont intégrées plusieurs feuilles de gainage (11, 12) de nature perméable ou imperméable à l'eau.

2. Structure isolante suivant la revendication 1, **caractérisée en ce que** le gainage de feuilles (5) est réalisé avec une première feuille de gainage (11), tournée vers la zone de la peau de la structure de l'avion, et avec une seconde feuille de gainage (12), tournée vers la zone de la cabine de l'aéronef.

3. Structure isolante suivant les revendications 1 et 2, **caractérisée en ce que** le matériau de la première et/ou de la seconde feuilles de gainage (11, 12) et/ou des feuilles de gainage supplémentaires, qui sont intégrées dans le gainage de feuilles (5), est réalisé avec des propriétés de matériau différentes.

4. Structure isolante suivant la revendication 3, **caractérisée en ce que** le matériau de la première et de la seconde feuilles de gainage (11, 12) et de chaque feuille de gainage supplémentaire est configuré avec des porosités différentes sur l'épaisseur des feuilles et les propriétés chimiques de chaque feuille de gainage de la structure de feuilles ont une réalisation différente.

5. Structure isolante suivant les revendications 1 à 3, **caractérisée en ce que** le comportement de diffusion, dépendant de la direction, de la première feuille de gainage (11) pendant un vol est perméable en direction de la zone de la peau de la structure de l'avion et moins perméable en direction de la zone de la cabine ou inversement lors d'un séjour au sol.

6. Structure isolante suivant la revendication 1, **caractérisée en ce que** le gainage de feuilles (5) est réalisé avec plusieurs feuilles de gainage (11, 12) juxtaposées en couches de même ou de matériau différent, dont l'agencement est de type sandwich.

7. Structure isolante suivant la revendication 6, **caractérisée en ce qu'**une fente d'aération est réalisée entre les feuilles de gainage stratifiées, laquelle fente influe favorablement sur le transport des liquides diffusants ou des agents gazeux diffusants.

8. Structure isolante suivant la revendication 1, **caractérisée en ce que** le gainage de feuilles (5) a une configuration étanche imperméable à l'eau en direction de la zone de la peau de la structure de l'avion et une configuration étanche perméable à l'eau en direction de la zone de la cabine de l'aéronef.

9. Structure isolante suivant la revendication 2, **caractérisée en ce que** la première feuille de gainage (11) est réalisée avec un matériau hydrophobe et la seconde feuille de gainage (12) est réalisée avec un matériau d'étanchéité, hydrophile, ou inversement.

10. Structure isolante suivant les revendications 1 à 4, **caractérisée en ce que** le matériau de la première et/ou de la seconde feuilles de gainage (11, 12) et/ou des feuilles de gainage supplémentaires est réalisé avec un matériau de feuilles en polymères amorphes, cristallins ou semi-cristallins ou un matériau de type caoutchouc.

11. Structure isolante suivant la revendication 10, **caractérisée en ce que** le matériau des feuilles polymère est choisi parmi le PTMSP, 6-FDA-based ; PI, PEI, PS, PTFE, Nafion et PET.

12. Structure isolante suivant la revendication 9, **caractérisée en ce que** la première feuille de gainage (11) est réalisée avec un matériau de feuille en silicone et la seconde feuille de gainage (12) avec un matériau de feuille en PTFE.

13. Structure isolante suivant les revendications 3 et 10, **caractérisée en ce que** la première feuille de gainage (11) est réalisée avec un matériau hydrophobe tissé, le tissu étant apte à retenir l'eau à l'état liquide et à diffuser largement l'eau à l'état de vapeur au travers des orifices du tissu.

14. Structure isolante suivant la revendication 2, **caractérisée en ce que** la seconde feuille de gainage (12) est réalisée avec un matériau perméable à la vapeur, qui réalise un équilibrage de pression entre la zone de la cabine et le matériau isolant de gainage des feuilles du paquet isolant (1).

15. Structure isolante suivant la revendication 9, **caractérisée en ce que** la première et/ou la seconde feuilles de gainage (11, 12) sont réalisées avec un PTFE ou [PDD]/PTFE tissé.

16. Structure isolante suivant la revendication 4, **caractérisée en ce que** les porosités du matériau de feuilles utilisé sont réalisées avec un diamètre de pores différent, qui est défini par une plage de porosités entre macroporeuse, mésoporeuse, microporeuse et poreuse dense.

17. Structure isolante suivant la revendication 16, **caractérisée en ce que** le diamètre moyen des pores indiqué est > 0.1 µm pour des macropores, à partir de 5 nm pour des mésopores, à partir de 1 nm pour des micropores et < 1 nm pour des pores denses.

18. Structure isolante suivant la revendication 6, **caractérisée en ce qu'**une fente est disposée entre les feuilles de gainage stratifiées, afin de permettre la dissipation continue d'humidité.

19. Structure isolante suivant la revendication 18, **caractérisée en ce qu'**une fente d'environ 10 mm est disposée entre des feuilles de gainage superposées et/ou juxtaposées, afin de permettre un écoulement sans entrave d'eau à l'état liquide.

20. Structure isolante suivant la revendication 18, **caractérisée en ce que** l'écartement entre les feuilles de gainage ou les membranes est réalisé par des espaceurs, de préférence des «spacer».

21. Structure isolante suivant la revendication 1, **caractérisée en ce que** la première zone de feuilles (15A) est de nature hydrophile sous dépendance thermique sur le côté des feuilles orienté en direction de la zone de la peau de la structure de l'avion et la seconde zone de feuilles (15B) est de nature hydrophobe sans dépendance thermique sur le côté des feuilles orienté en direction de la zone de la cabine de l'aéronef, le côté des feuilles de type hydrophobe de la seconde zone de feuilles (15B) étant apte pendant le vol à réaliser un très faible transport de liquide sous l'effet de faibles températures.

22. Structure isolante suivant la revendication 1, **caractérisée en ce qu'**une troisième feuille de gainage (13) est stratifiée de façon quelconque de plusieurs couches de feuilles de matériau différent.

23. Structure isolante suivant la revendication 1, **caractérisée en ce que** la stratification de la première zone de feuilles (15A) est de nature hydrophobe avec une couche de feuilles orientée en direction de la zone de la peau de la structure de l'avion, et de nature hydrophile avec une couche de feuilles orientée en direction du côté de la cabine de l'aéronef, ainsi que la stratification de la seconde zone de feuilles (15B) est de nature hydrophile avec une couche de feuilles orientée en direction de la zone de la peau de la structure de l'avion et de nature hydrophobe avec une couche de feuilles orientée en direction du côté cabine de l'aéronef, ou inversement, dans la mesure où le matériau isolant, gainé de feuilles, du paquet isolant (1) ou la zone de la cabine ou la zone de la peau, proche des feuilles, sous soumis en permanence à un séchage.

24. Structure isolante suivant la revendication 1, **caractérisée en ce que** la porosité d'une troisième feuille de gainage (13) est poreuse sur le côté des feuilles (15A) ou couche de feuilles orientés en direction de la zone de la peau de la structure de l'avion et microporeuse sur le côté des feuilles (15B) ou couche de feuilles orientés en direction du côté cabine de l'aéronef, ou inversement.

25. Structure isolante suivant l'une des revendications 1 ou 24, **caractérisée en ce que** l'épaisseur de feuille de l'une des troisièmes feuilles de gainage (13) de la première et/ou de la seconde zone de feuilles (15A, 15B), de réalisation microporeuse et de nature différemment dense, a une réalisation très mince, de préférence dans la plage de 0,1 µm à 0,5 µm.

26. Structure isolante suivant l'une des revendications 1 ou 24, **caractérisée en ce que** l'épaisseur de feuille de l'une des troisièmes feuilles de gainage (13) de la première et/ou de la seconde zone de feuilles (15A, 15B), de réalisation poreuse et de nature différemment dense, a une réalisation mince, de préférence dans la plage de 10 µm à 150 µm.

27. Structure isolante suivant l'une des revendications 1 ou 24, **caractérisée en ce que** la porosité de l'une des troisièmes feuilles de gainage (13) est réalisée avec un matériau poreux ou microporeux ou une couche de ce dernier, dont les pores sont réalisés avec un diamètre moyen inférieur à 0,1 µm à supérieur à 1 nm.

28. Structure isolante suivant la revendication 1, **caractérisée en ce que** le matériau de l'une des troisièmes feuilles de gainage (13) ou de la première et de la seconde zone de feuilles (15A, 15B) est pourvu au-dessous du paquet isolant (1) d'une porosité telle que seule de l'eau à l'état gazeux, sans aucune eau à l'état liquide, peut passer au travers des pores.

29. Structure isolante suivant la revendication 1,**caractérisée en ce que** le côté des feuilles hydrophile, orienté en direction de la zone de la peau de la structure de l'avion, de la première zone de feuilles (15A) est réalisé avec un matériau de feuilles en nitrocellulose, polycarbonate, polysulfone, polyéthersulfone, poly-étherimide, polyimide ou polyamide, et le côté des feuilles hydrophobe, orienté en direction de la zone de la cabine de l'aéronef, de la première zone de feuilles (15A) est réalisé avec un matériau en combinaisons [PDD]/PTFE ou avec un matériau de feuilles hydrophobe en poly-vinylidènefluorure, polyéthylènethéraphtalate ou poly-propylène, par lesquels, en présence de faibles températures, le transport d'eau à l'état liquide est maintenu à une valeur très faible pendant le vol de l'aéronef.

30. Structure d'isolation suivant la revendication 1, **caractérisée en ce que** la première zone de feuilles (15A) est réalisée avec un matériau de feuilles sans porosités, de préférence en silicone ou en un matériau de feuilles avec des propriétés analogues, ou avec un matériau de feuilles de faible porosité.

31. Structure isolante suivant la revendication 1, **caractérisée en ce qu'**une feuille de gainage (13) est de nature hydrophobe, feuille sur le gainage (5) de laquelle sont répartis de petits ou de très petits pores sous l'influence d'une faible température et des pores plus gros sous l'influence de hautes températures, lesquels pores ne laissent traverser aucun liquide ou aucune vapeur de liquide.

32. Structure isolante suivant la revendication 1, **caractérisée en ce qu'**une troisième feuille de gainage (13) a une réalisation hydrophile sous l'influence de hautes températures et une réalisation hydrophobe sous l'influence de faibles températures.

33. Structure isolante suivant la revendication 1, **caractérisée en ce qu'**une couche hygroscopique (14) est revêtue de la seconde zone de feuilles (15B) d'une troisième feuille de gainage (13).

34. Structure isolante suivant la revendication 33, **caractérisée en ce que** la couche hygroscopique (14) est réalisée avec des matières très hygroscopiques, de préférence des combinaisons de dioxyde de silicium ou une glycérine.

35. Structure isolante suivant la revendication 34, **caractérisée en ce que** les combinaisons de dioxyde de silicium sont de nature poreuse, réalisées avec un Silicagel.

36. Structure isolante suivant la revendication 9, **caractérisée en ce que** la première ou une troisième feuille de gainage (11, 13) ou la première zone de feuilles (15A) est réalisée avec un matériau de feuille réalisant des propriétés hydrophobes, de préférence un «poly(2,2-bistrifluorométhyl-4,5-difluoro-1,3-dioxol)[PDD] /PTFE».

37. Structure isolante suivant la revendication 32, **caractérisée en ce que** la première zone de feuilles (15A) n'est soumise à aucune dépendance thermique et est de nature hydrophobe, ainsi que la seconde zone de feuilles (15B) est soumise à une dépendance thermique existante et est également de nature hydrophobe, ou inversement.

38. Structure isolante suivant la revendication 1, **caractérisée en ce que** le gainage de feuilles 5 et une troisième feuille de gainage (13) des paquets isolants (1) gainés de feuilles sont réalisés avec des trous de drainage appropriés ou avec d'autres mesures, qui réalisent un équilibrage de pression entre la zone de la cabine et le matériau isolant de gainage de feuilles du paquet isolant (1) et le drainage de l'eau à l'état liquide.
